# EUROPEAN PATENT APPLICATION

(11) **EP 2 689 860 A1**
(43) Date of publication of application: **29.01.2014**
(21) Application number: 11862235.6
(22) Date of filing: 08.07.2011
(51) Int. Cl.: B09B 3/00, F26B 5/02, F26B 9/08, B03C 3/019

(54) **ENVIRONMENT-FRIENDLY CORPSE TREATMENT APPARATUS**

(30) Priority: 25.03.2011 KR 20110026631; 28.06.2011 KR 20110063060
(71) Applicant: Cho, Young Doo, Chungcheongnam-do 139-220 (KR)
(72) Inventor: KIM, Joong Yeol, Seongnam-si Gyeonggi-do 461-300 (KR)
(74) Representative: Tomlinson, Kerry John
(86) International application number: PCT/KR2011/005008
(87) International publication number: WO 2012/133989

(57) **Abstract**

The present invention relates to an environment-friendly corpse treatment apparatus, wherein a pollutant such as a toxic exhaust gas or dioxin is not generated, soil is not contaminated even though a treated corpse is buried, and the configuration thereof is simple. The present invention provides an environment-friendly corpse treatment apparatus comprising: a drying portion for removing moisture contained in a corpse; a pulverization portion for applying an impact to the moisture-removed corpse to pulverize the same into small pieces; and a foreign matter separation portion for separating a foreign matter contained in the pulverized corpse, wherein the corpse loaded at the drying portion is dried in a vacuum state. According to the present invention, the apparatus is thus environmentally friendly since a pollutant such as a toxic exhaust gas or dioxin is not generated, soil is not contaminated even though a corpse is buried since the foreign matter contained in the corpse is removed, and a treated corpse is appropriate for natural burial or woodland burial since the treated corpse can be used as a nutrient. In addition, a corpse can be used as manure or feed if the corpse is animal waste, there is no chemical change in the corpse, and maintenance and repair are easy.

## Description

### [Technical Field]

The present invention relates to corpse treatment, and more particularly, to an environment-friendly corpse treatment apparatus.

### [Background Art]

Methods of disposing of a dead human body include four disposal methods such as cremation, earth burial, water burial, and aerial burial. In Korea, earth burial and cremation are often used. Earth burial is a disposal method of burying a corpse in the ground, and cremation is a disposal method of incinerating a corpse.

However, since there is a limitation in the amount handled by earth burial in a small country like Korea, a method of treating a corpse through cremation, and storing ashes in a charnel house or the like or burying the ashes in the ground is used as a solution.

However, such a method of treating a corpse through cremation has a problem in that a low temperature combustion process is performed due to moisture contained in a corpse during incineration and thus a pollutant such as a toxic exhaust gas or dioxin is generated. Also, the method has a problem in that when ashes or the like are buried in the ground after cremation, since a foreign matter such as a metal material contained in the corpse is not removed, soil is contaminated after the burial.

Although promession technology of rapidly freezing a corpse using liquid nitrogen, removing moisture contained in the corpse by sublimation at a pressure less than or equal to a triple point, and pulverizing the corpse by applying a physical force has been suggested as a solution to these problems, promession is not a perfect solution because although a process of treating a corpse is environmentally friendly, large equipment having a complicated configuration is used.

### [Disclosure]

### [Technical Problem]

The present invention is directed to providing an environment-friendly corpse treatment apparatus that does not generate a pollutant such as a toxic exhaust gas or dioxin.

The present invention is also directed to providing an environment-friendly corpse treatment apparatus that does not contaminate soil even though a treated corpse is buried in the ground.

The present invention is also directed to providing an environment-friendly corpse treatment apparatus that has a simple configuration.

### [Technical Solution]

One aspect of the present invention provides an environment-friendly corpse treatment apparatus including: a drying portion for removing moisture contained in a corpse; a pulverization portion for applying an impact to the moisture-removed corpse to pulverize the same into small pieces; and a foreign matter separation portion for separating a foreign matter contained in the pulverized corpse, wherein the corpse loaded at the drying portion is dried in a vacuum state.

The drying portion may include a pump member for creating a vacuum state in the drying portion, and a drying member for removing the moisture contained in the corpse.

The drying member may be an electromagnetic wave generator for generating microwaves.

The drying portion may include a stirring member for stirring the corpse so that the microwaves are uniformly applied to the corpse during a process of drying the corpse.

A pair of the drying units may be provided so that a process of drying the corpse and a process of introducing the corpse and creating a vacuum state are simultaneously performed.

The pulverization portion may include a plate for applying a vibration to the corpse to pulverize the dried corpse into small pieces, wherein discharge holes are formed in the plate to discharge the pulverized corpse.

The plate may have a cylindrical shape, wherein the cylindrical plate is rotatable so that the loaded corpse is pulverized due to an impact caused by free fall.

The environment-friendly corpse treatment apparatus may further include a dehumidification portion for removing vapor generated in the drying portion.

The dehumidification portion may include an evaporation member in which a low temperature coolant flows.

There may be provided a compression member for compressing the coolant transmitted from the evaporation member to a high temperature and high pressure state to supply the low temperature coolant to the evaporation member, a condensation member for condensing the coolant transmitted from the compression member to a low temperature and high pressure state, and an expansion member for expanding the coolant transmitted from the condensation member to a low temperature and low pressure state and transmitting the same to the evaporation member.

There may be provided a cooling pipe for supplying low temperature water to an outside of a condensation coil to cool the coolant flowing in the condensation member, a retrieval pipe for retrieving high temperature water heated after being heat exchanged in the condensation coil, and a cooling tower for cooling the high temperature water transmitted through the retrieval pipe and supplying the same to the cooling pipe.

The evaporation member may include a pair of evaporation coils, and a three-way valve may be provided between the drying portion and the pair of evaporation coils so that vapor generated in the drying portion is alternately supplied to the pair of evaporation coils.

A three-way valve may be provided between the expansion member and the pair of evaporation coils so that the coolant transmitted from the expansion member flows in the evaporation coil to which the vapor is supplied.

A three-way valve may be provided between the pair of evaporation coils and the compression member so that the coolant transmitted from the pair of evaporation coils to the compression member is alternately transmitted.

The dehumidification portion may include a heat exchange member in which low temperature water flows.

There may be provided a cooling pipe for supplying low temperature water so that the low temperature water flows in the heat exchange member, a retrieval pipe for retrieving high temperature water heated after being heat exchanged in the heat exchange member, and a cooling tower for cooling the high temperature water transmitted through the retrieval pipe and supplying the same to the cooling pipe.

The heat exchange member may be provided along a circumference of the drying portion so that a temperature of an inner circumferential surface of the drying portion is lowered to a dew point of vapor generated in the drying portion.

The dehumidification portion may be an electric precipitator for removing water molecules contained in the vapor generated in the drying portion using an electrostatic force.

The foreign matter separation portion may include a brush member for separating the foreign matter by applying a physical force.

The brush member may include one pair of roller type brushes having parallel rotational axes.

There may be provided a container for storing the foreign matter-removed corpse, and a foreign matter container for allowing the separated foreign matter to be stacked therein.

The container may include a compression member for compressing the corpse to reduce a volume of the foreign matter-removed corpse.

### [Advantageous Effects]

Effects of the aforesaid environment-friendly corpse treatment apparatus according to the present invention are as follows.

First, the environment-friendly corpse treatment apparatus is environmentally friendly since a pollutant such as a toxic exhaust gas or dioxin is not generated.

Second, soil is not contaminated even though a corpse is buried since a foreign matter contained in the corpse is removed, and a treated corpse is appropriate for natural burial or woodland burial since the treated corpse can be used as a nutrient. In addition, a corpse can be used as manure or feed if the corpse is animal waste.

Third, there is little chemical change in and little damage to a corpse since a drying process is performed at a low temperature.

Fourth, maintenance and repair are easy since a configuration of equipment is simple.

### [Description of Drawings]

FIG. 1 is a schematic view illustrating an environment-friendly corpse treatment apparatus according to an embodiment of the present invention.
FIGS. 2 and 3 are views illustrating an operation state of the environment-friendly corpse treatment apparatus, according to an embodiment of the present invention.
FIG. 4 is a schematic view illustrating an environment-friendly corpse treatment apparatus according to another embodiment of the present invention.
FIG. 5 is a schematic view illustrating an environment-friendly corpse treatment apparatus according to another embodiment of the present invention.

### [Best Mode]

The present invention provides an environment-friendly corpse treatment apparatus including a drying portion for removing moisture contained a corpse, a pulverization portion for applying an impact to the moisture-removed corpse to pulverize the same into small pieces, and a foreign matter separation portion for separating a foreign matter contained in the pulverized corpse, wherein the corpse loaded at the drying portion is dried in a vacuum state.

### [Modes of the Invention]

The present invention will now be described more fully with reference to the accompanying drawings, in which exemplary embodiments of the invention are shown.

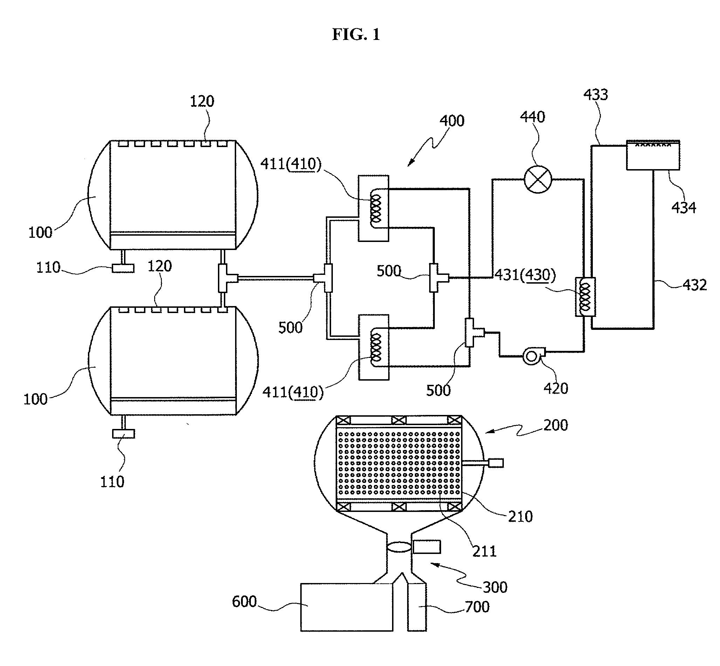

FIG. 1 is a schematic view illustrating an environment-friendly corpse treatment apparatus according to an embodiment of the present invention.

As shown in FIG. 1, the present embodiment provides the environment-friendly corpse treatment apparatus including a drying portion 100 for removing moisture contained in a corpse, a pulverization portion 200 for applying an impact to the moisture-removed corpse to pulverize the same into small pieces, and a foreign matter separation portion 300 for separating a foreign matter contained in the pulverized corpse, wherein the corpse loaded at the drying portion 100 is dried in a vacuum state.

That is, in order to treat the corpse in the present embodiment, moisture contained in the corpse is first removed. To this end, the corpse is introduced into the drying portion 100. However, a drying process is performed in the drying portion 100 after an inside of the drying portion 100 is in a vacuum state.

As such, when the corpse is dried in the vacuum state, the moisture contained in the corpse may be easily removed. This is because water generally evaporates at 100°C at an atmospheric pressure, but generally evaporates at a temperature lower than 100°C in a vacuum state. Also, since the moisture evaporates at a relatively low temperature and thus there is little chemical change in the corpse, there may be little damage to the corpse.

The corpse from which the moisture is removed through the process is introduced into the pulverization portion 200 to be pulverized into small pieces. When the corpse is pulverized after the drying process, since the moisture is removed and thus a volume and a weight of the corpse are reduced, a size of the pulverization portion 200 may be reduced. This is because since the corpse is easily pulverized even with a small impact, the pulverization portion 200 may easily pulverize the corpse.

The small pieces obtained by pulverizing the corpse are separated by the foreign matter separation portion 300 into a residue such as ashes and a foreign matter.

The drying portion 100 may include a pump member 110 for creating a vacuum state in the drying portion 100, and a drying member 120 for removing the moisture contained in the corpse.

As described above, it is important to create a vacuum state in the drying portion 100 in order to easily evaporate the moisture contained in the corpse in the present embodiment. To this end, the drying portion 100 includes the pump member 110. A vacuum pump that is generally used may be used as the pump member 110, and thus a detailed explanation thereof will not be given.

The drying portion 100 includes the drying member 120 for evaporating and removing the moisture contained in the corpse, and the drying member 120 may be an electromagnetic wave generator for generating microwaves.

A method of directly applying heat to the corpse may be used in order to evaporate the moisture contained in the corpse. The method may be a method of heating the corpse beginning from a surface by directly applying heat to the corpse and gradually heating the corpse to an inside through conduction or radiation. When the corpse is heated using the method, since a thermal conductivity of the corpse is low, a temperature difference between the surface and the inside has to be large in order to sufficiently heat up to the inside. However, when the surface is heated at a high temperature in order to increase the temperature difference, the surface of the corpse may be burnt out.

In the present embodiment, in order to solve such a problem, an electromagnetic wave generator for generating microwaves may be used as the drying member 120. Electromagnetic waves having very high frequencies are particularly called microwaves. When electromagnetic waves are classified according to frequencies, 30 to 300 kHz are called long waves, 300 to 3000 kHz are called medium waves, 3000 MHz (3 GHz) to 30 GHz are called centimeter waves, 30 to 300 GHz are called millimeter waves, and 300 GHz or more are called submillimeter waves. From among them, electromagnetic waves ranging from 300 MHz to 30 GHz are called microwaves. Waves having a short wavelength such as microwaves have similar properties to light waves, and thus have rectilinear propagation, reflection, and absorption properties. Accordingly, such waves may be used to heat foods through ultra-short-wave-dielectric heating, defrost frozen foods, sterilize foods, and eliminate pests in foods through sterilization as well as being widely used for communication (transmission of electric waves).

As such, when the corpse is heated using an electromagnetic wave generator for generating microwaves, since the corpse may be easily heated to the inside in a short time, the surface of the corpse may not be burnt out and only moisture contained in the inside may be removed.

If microwaves are intensively applied to only any one portion of the corpse, only moisture contained in the portion to which the microwaves are emitted may be removed and moisture contained in other portions may not be removed. Also, while the moisture contained in the other portions is entirely removed, the portion to which the microwaves are emitted may be burnt out.

To prevent this, the drying portion 100 further includes a stirring member. The stirring member stirs the corpse so that microwaves are uniformly emitted to the corpse during a process of drying the corpse. In this configuration, the moisture contained in the corpse may be easily removed and the corpse may not be burnt.

It is preferable that the stirring member is configured to stir the corpse in an up-and-down direction as well as a left-and-right direction.

It is preferable that a pair of the drying portions 100 are provided so that a process of drying the corpse and a process of creating a vacuum state are simultaneously performed.

This is because when only one drying portion 100 is provided, corpse treatment may be stopped from a time when a process of drying an introduced corpse ends to a time when another corpse is introduced and a vacuum state is created in the drying portion 100.

It is preferable that the pulverization portion 200 includes a plate 210 for applying a vibration to the corpse so that the dried corpse is pulverized into small pieces, and discharge holes 211 are formed in the plate 210 to discharge the pulverized corpse.

The corpse dried in the drying portion 100 may be introduced into the pulverization portion 200, and the completely dried corpse may be easily pulverized even with a small impact. To this end, the plate 210 includes a vibration applying member (not shown) for applying a vibration.

As shown in FIG. 1, it is preferable that the discharge holes 211 are formed in the plate 210 to discharge the pulverized corpse. The pulverized corpse is introduced into the foreign matter separation portion 300. When the pulverized corpse is entirely introduced, a foreign matter may not be appropriately separated. Accordingly, in order to improve foreign matter separation efficiency, it is preferable that as soon as the corpse is pulverized, the corpse is introduced into the foreign matter separation portion 300. To this end, the discharge holes 211 are formed in the plate 210 to immediately discharge the pulverized corpse.

The plate 210 may be formed to have a cylindrical shape, and the cylindrical plate 210 is rotatable so that the stacked corpse may be pulverized due to an impact caused by free fall.

When the dried corpse is introduced into the cylindrical plate 100 and the plate 100 rotates about an axis, the corpse moves upward along an inner circumferential surface of the plate 100 and then free falls to a lowest point of the plate 100. The corpse is pulverized by being impacted when reaching the lowest point of the plate 100.

However, it is necessary to adjust a rotational speed of the plate 100. A centrifugal force applied to the corpse due to the rotation of the plate 100 and gravity applied to the corpse are compared with each other and a rotational speed of the plate 100 is adjusted so that the centrifugal force is generated to be less than the gravity. This is because if the centrifugal force applied to the corpse is greater than the gravity, the corpse does not free fall even at a highest point of the plate 100 and continuously rotates along the inner circumferential surface of the plate 100 due to the centrifugal force. Although the rotational speed of the plate 100 may be accurately obtained by calculating the gravity and the centrifugal force applied to the corpse, the calculation may be cumbersome. Accordingly, it is preferable that a rotational speed is adjusted by directly checking from the outside whether the corpse free falls. To this end, an additional controller (not shown) capable of adjusting a rotational speed may be provided.

A shape of the plate 210 is not always limited to a cylindrical shape, and may be a polygonal prism shape such as a triangular prism shape or a quadrangular prism shape.

Also, the plate 210 may be formed to have a planar shape. When the dried corpse is loaded at the planar plate 210 and a vibration is applied, the corpse is pulverized into small pieces and then the small pieces are discharged to the outside through the discharge holes 211.

It is preferable that a dehumidification portion 400 is further included to remove vapor generated in the drying portion 100.

The moisture contained in the corpse is removed while evaporating as vapor in the drying portion 100. When the vapor stays in the drying portion 100, drying efficiency may be reduced. Accordingly, the environment-friendly corpse treatment apparatus according to the present embodiment further includes the dehumidification portion 400 capable of removing the vapor.

The dehumidification portion 400 includes an evaporation member 410 in which a low temperature coolant flows. When vapor is close to the evaporation member 410 in which the low temperature coolant flows, heat exchange occurs between the vapor and the coolant flowing in the evaporation member 410, and the vapor from which heat is removed is phase-changed into a liquid or a solid. The vapor generated in the drying portion 100 is continuously supplied to the dehumidification portion 400, and the vapor supplied to the dehumidification portion 400 is removed by being phase-changed through the aforesaid process.

In the present embodiment, as shown in FIG. 1, it is preferable that there are provided a compression member 420 for compressing the coolant transmitted from the evaporation member 410 to a high temperature and high pressure state to supply the low temperature coolant to the evaporation member 410, a condensation member 430 for condensing the coolant transmitted from the compression member 420 to a low temperature and high pressure state, and an expansion member 440 for expanding the coolant transmitted from the condensation member 430 to a low temperature and low pressure state and transmitting the same to the evaporation member 410.

That is, the low temperature coolant supplied to the evaporation member 410 uses a vapor compression refrigeration cycle. The vapor compression refrigeration cycle is the same as a conventional vapor compression refrigeration cycle. The condensation member 430 may be a general air cooling condenser in which a coolant exchanges heat with low temperature external air, or a water cooling condenser that will be explained below.

It is preferable that there are provided a cooling pipe 432 for supplying low temperature water to the outside of a condensation coil 431 to cool the coolant flowing in the condensation member 430, a retrieval pipe 433 for retrieving high temperature water heated after being heat exchanged in the condensation coil 431, and a cooling tower 434 for cooling the high temperature water transmitted through the retrieval pipe 433 and supplying the same to the cooling pipe 432.

As shown in FIG. 1, water is used in order to cool the condensation coil 431 provided in the condensation member 430. That is, while a condenser using a conventional general vapor compression refrigeration cycle cools a coolant through heat exchange between the coolant and low temperature external air, the present embodiment uses water instead of external air. Since water has a high specific heat, a coolant may be more easily cooled using the water than using external air.

Also, the high temperature water heated by being heat exchanged with the coolant is transmitted to the cooling tower 434 through the retrieval pipe 433, and the low temperature water cooled by being heat exchanged with the external air in the cooling tower 434 is supplied again to the condensation coil 431 through the cooling pipe 432. Through this process, the coolant flowing in the condensation coil 431 may be continuously cooled.

The evaporation member 410 may include a pair of evaporation coils 411, and a three-way valve 500 may be provided between the drying portion 100 and the pair of evaporation coils 411 to alternately supply the vapor generated in the drying portion 100 to the pair of evaporation coils 411.

As described above, the vapor generated in the drying portion 100 is supplied to the evaporation member 410. The supplied vapor is phase-changed into ice particles and accumulated on surfaces of the evaporation coils 411 in which the low temperature coolant flows. As the amount of the ice particles accumulated on the surfaces of the evaporation coils 411 increases, the degree to which the vapor is removed decreases. Accordingly, it is necessary to remove the ice particles accumulated on the surfaces of the evaporation coils 411 in order for the degree to which the vapor is removed to be maintained at a predetermined level.

In the present embodiment, as shown in FIG. 1, the evaporation member 410 includes the one pair of evaporation coils 411, and the vapor generated in the drying portion 100 is alternately supplied. That is, a process of removing the vapor is first performed in one evaporation coil 411, and when the amount of ice particles accumulated on the one evaporation coil 411 exceeds a predetermined level, a vapor supply passage is changed to the other evaporation coil 411. To this end, the three-way valve 500 is provided between the drying portion 100 and the pair of evaporation coils 411. When the vapor is supplied to the other evaporation coil 411, a process of removing the ice particles accumulated on the surface of the one evaporation coil 411 is performed.

In order to measure the amount of accumulated ice particles, surface resistances of the evaporation coils 411 may be measured, or in order to measure the degree to which the vapor is removed, a humidity sensor may be installed and a determination may be made based on the degree to which a humidity is changed.

The three-way valve 500 may be provided between the expansion member 440 and the pair of evaporation coils 411 so that the coolant transmitted from the expansion member 440 flows in the evaporation coils 411 to which the vapor is supplied.

As described above, since the vapor is alternately supplied to the pair of evaporation coils 411, it is preferable that the low temperature coolant transmitted from the expansion member 440 is also alternately supplied to the pair of evaporation coils 411. That is, the coolant is designed to flow in the evaporation coils 411 to which the vapor is supplied. To this end, a three-way valve 500 is provided between the expansion member 440 and the one pair of evaporation coils 411. In this configuration, the coolant may be alternately supplied from one expansion member 440 to the pair of evaporation coils 411.

A three-way valve 500 may be provided between the pair of evaporation coils 411 and the compression member 420 so that the coolant transmitted from the pair of evaporation coils 411 to the compression member 420 is alternately transmitted.

As described above, since the low temperature coolant is alternately supplied to the one pair of evaporation coils 411, it is preferable that a three-way valve 500 is provided between the pair of evaporation coils 411 and one compression member 420 so that the coolant transmitted from the pair of evaporation coils 411 is alternately transmitted to the one compression member 420.

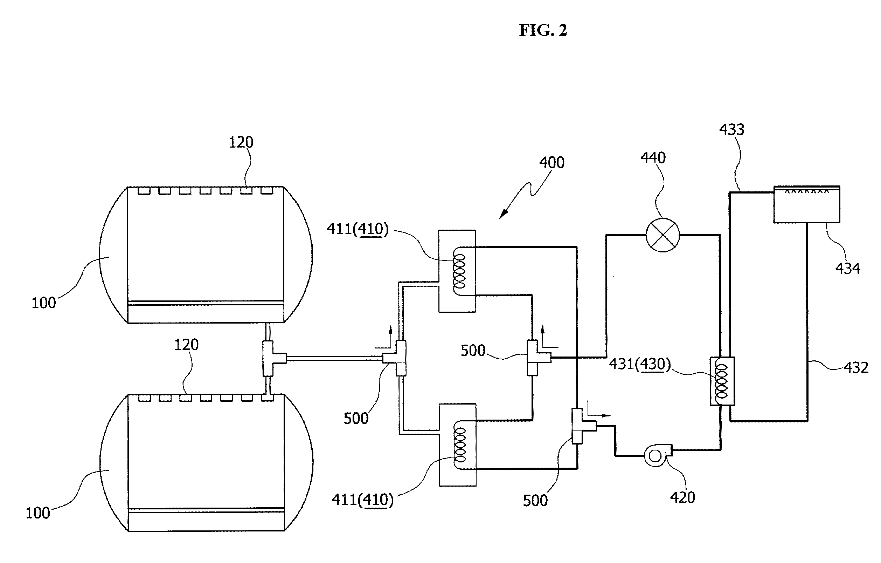

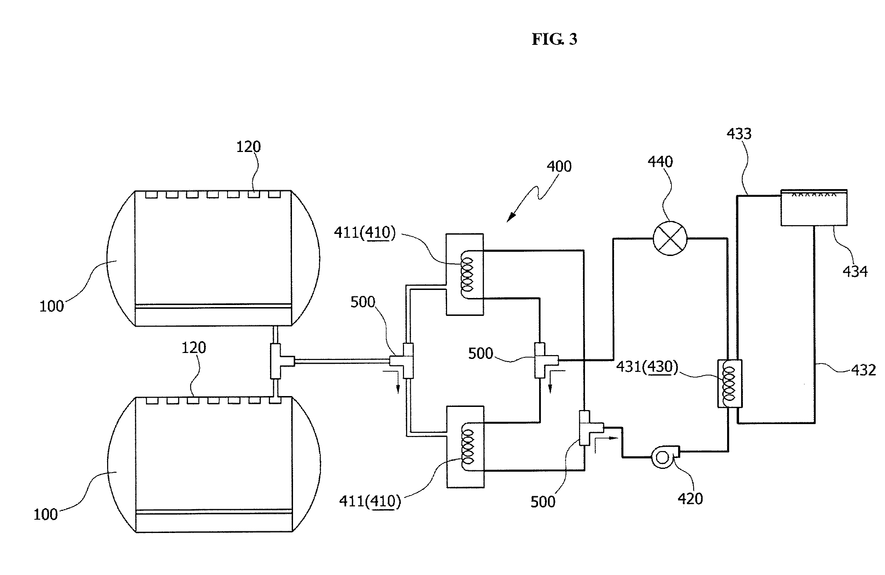

FIGS. 2 and 3 are views illustrating an operation state of the environment-friendly corpse treatment apparatus, according to an embodiment of the present invention.

A three-way valve 500 is provided between the drying portion 100 and the pair of evaporation coils 411, between the expansion member 440 and the pair of evaporation coils 411, and between the one pair of evaporation coils 411 and the compression member 420. It is preferable that the three-way valve 500 is configured to form a fluid passage to the evaporation coils 411 in which a process of removing the vapor is performed, and an additional controller (not shown) may be provided to simultaneously control the three-way valves 500.

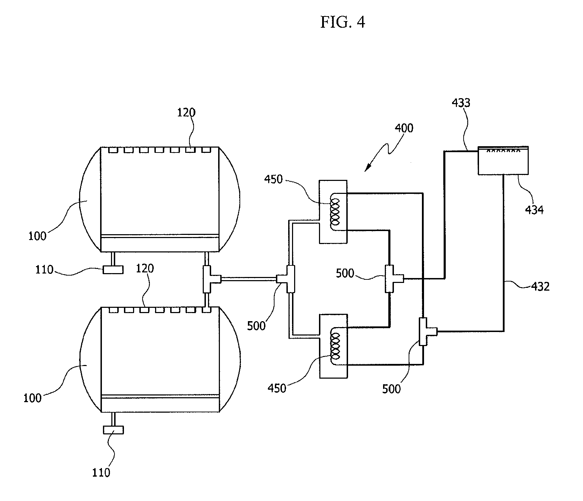

FIG. 4 is a schematic view illustrating an environment-friendly corpse treatment apparatus according to another embodiment of the present invention.

The dehumidification portion 400 includes a heat exchange member 450 in which low temperature water flows. As shown in FIG. 4, when vapor is close to the heat exchange member 450 in which the low temperature water flows, heat exchange occurs between the vapor and the water flowing in the heat exchange member 450, and the vapor from which heat is removed is phase-changed to a liquid. Vapor generated in the drying portion 100 is continuously supplied to the dehumidification portion 400, and the vapor supplied to the dehumidification portion 400 is removed by being phase-changed through the aforesaid process.

It is preferable that there are provided the cooling pipe 432 for supplying low temperature water to allow the low temperature water to flow in the heat exchange member 450, the retrieval pipe 433 for retrieving high temperature water heated after being heat exchanged in the heat exchange member 450, and the cooling tower 434 for cooling the high temperature water transmitted through the retrieval pipe 433 and supplying the same to the cooling pipe 432.

As shown in FIG. 4, the cooling pipe 432 for supplying the low temperature water into the heat exchange member 450 is provided. The low temperature water is heated by being heat exchanged with the vapor, and the heated high temperature water is transmitted to the cooling tower 434 through the retrieval pipe 433. The low temperature water cooled by being heat exchanged with external air in the cooling tower 434 is supplied again to the heat exchange member 450 through the cooling pipe 432.

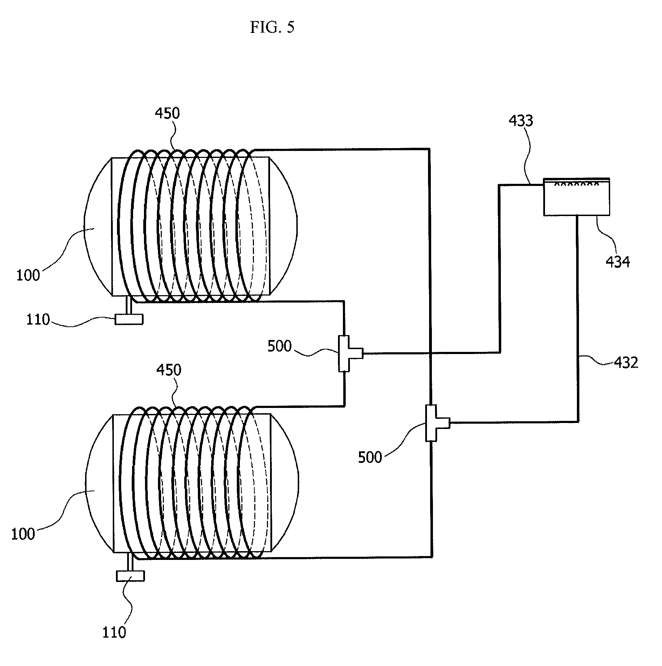

FIG. 5 is a schematic view illustrating an environment-friendly corpse treatment apparatus according to another embodiment of the present invention.

The heat exchange member 450 may be provided along a circumference of the drying portion 100 as shown in FIG. 5 so that a temperature of an inner circumferential surface of the drying portion 100 is lowered to a dew point of vapor generated in the drying portion 100.

In this configuration, the vapor generated in the drying portion 100 may be removed in the drying portion 100 without being moved to the outside. The inner circumferential surface of the drying portion 100 is cooled to the dew point of the generated vapor. When the vapor generated in the drying portion 100 is close to the inner circumferential surface of the drying portion 100, the vapor condenses into a liquid, and then moves downward along the inner circumferential surface of the drying portion 100 due to gravity.

It is preferable that the drying portion 100 includes a collection member (not shown) for collecting the condensed water, and discharge holes (not shown) are formed in the collection member (not shown) to discharge the water.

The dehumidification portion 400 may be an electric precipitator for removing water molecules contained in the vapor generated in the drying portion 100 using an electrostatic force.

The water molecules contained in the vapor have a polarity due to an electron affinity difference between oxygen atoms and hydrogen atoms. The electric precipitator functions to move and remove the water molecules by applying an electrostatic force to the water molecules having the polarity.

When the electric precipitator is used, since a configuration such as a water cooling tower or a vapor compression cycle is not required, a configuration may be simplified and maintenance and repair are facilitated.

The corpse is pulverized by the pulverization portion 200 into small pieces and the small pieces are separated into skeletons, muscular tissues, and skin tissues. Muscles that are firmly attached to skeletons may not be separated. For this, the foreign matter separation portion 300 includes a brush member 310 for separating a foreign matter by applying a physical force. The brush member separates muscular tissues or the like attached to skeletons or the like by applying a physical force.

When the brush member includes one pair of roller type brushes having parallel rotational axes, the small pieces obtained by pulverizing the corpse using the pulverization portion 200 may be continuously discharged and may be automatically discharged.

It is preferable that there are provided a container 600 for storing the foreign matter-removed corpse and a foreign matter container 700 on which a separated foreign matter is stacked. As shown in FIG. 1, the corpse continuously supplied from the pulverization portion 200 is separated by the foreign matter separation portion 300 into a residue such as ashes and a foreign matter, and the container 600 and the foreign matter container 700 are provided to respectively store the residue and the foreign matter.

The ashes in the residue may be separately collected, pulverized, and inserted into a cinerary urn, or may be inserted into an environment-friendly coffin and buried through natural burial or woodland burial.

Although the explanation has been made based on a corpse in the present embodiment, the present embodiment is not limited thereto and may be for animal waste or agricultural, fisheries, and livestock waste.

The foreign matter-removed corpse stored in the container is received and laid in a cinerary urn. When the amount of the corpse exceeds a storage capacity of the cinerary urn, the corpse may not be easily received in the funerary urn.

In the present embodiment, in order to solve this problem, the container 600 includes a compression member. The compression member compresses the foreign matter-removed corpse received in the container. When a compressive force is applied to the corpse, the corpse pulverized into the small pieces is pulverized again into powder to reduce a volume, and thus may be easily received in the container.

While the invention has been shown and described with reference to certain exemplary embodiments thereof, it will be understood by those skilled in the art that various changes in form and details may be made therein without departing from the spirit and scope of the invention as defined by the appended claims.

## Claims

1. An environment-friendly corpse treatment apparatus comprising:
a drying portion for removing moisture contained in a corpse;
a pulverization portion for applying an impact to the moisture-removed corpse to pulverize the same into small pieces; and
a foreign matter separation portion for separating a foreign matter contained in the pulverized corpse,
wherein the corpse loaded at the drying portion is dried in a vacuum state.

2. The environment-friendly corpse treatment apparatus of claim 1, wherein the drying portion comprises a pump member for creating a vacuum state in the drying portion, and a drying member for removing the moisture contained in the corpse.

3. The environment-friendly corpse treatment apparatus of claim 2, wherein the drying member is an electromagnetic wave generator for generating microwaves.

4. The environment-friendly corpse treatment apparatus of claim 3, wherein the drying portion comprises a stirring member for stirring the corpse so that the microwaves are uniformly applied to the corpse during a process of drying the corpse.

5. The environment-friendly corpse treatment apparatus of claim 4, wherein a pair of the drying units are provided so that a process of drying the corpse and a process of introducing the corpse and creating a vacuum state are simultaneously performed.

6. The environment-friendly corpse treatment apparatus of claim 1, wherein the pulverization portion comprises a plate for applying a vibration to the corpse to pulverize the dried corpse into small pieces,
wherein discharge holes are formed in the plate to discharge the pulverized corpse.

7. The environment-friendly corpse treatment apparatus of claim 6, wherein the plate has a cylindrical shape,
wherein the cylindrical plate is rotatable so that the loaded corpse is pulverized due to an impact caused by free fall.

8. The environment-friendly corpse treatment apparatus of claim 1, further comprising a dehumidification portion for removing vapor generated in the drying portion.

9. The environment-friendly corpse treatment apparatus of claim 8, wherein the dehumidification portion comprises an evaporation member in which a low temperature coolant flows.

10. The environment-friendly corpse treatment apparatus of claim 9, wherein there are provided a compression member for compressing the coolant transmitted from the evaporation member to a high temperature and high pressure state to supply the low temperature coolant to the evaporation member, a condensation member for condensing the coolant transmitted from the compression member to a low temperature and high pressure state, and an expansion member for expanding the coolant transmitted from the condensation member to a low temperature and low pressure state and transmitting the same to the evaporation member.

11. The environment-friendly corpse treatment apparatus of claim 10, wherein there are provided
a cooling pipe for supplying low temperature water to an outside of a condensation coil to cool the coolant flowing in the condensation member,
a retrieval pipe for retrieving high temperature water heated after being heat exchanged in the condensation coil, and
a cooling tower for cooling the high temperature water transmitted through the retrieval pipe and supplying the same to the cooling pipe.

12. The environment-friendly corpse treatment apparatus of claim 10, wherein the evaporation member comprises a pair of evaporation coils, and
a three-way valve is provided between the drying portion and the pair of evaporation coils so that vapor generated in the drying portion is alternately supplied to the pair of evaporation coils.

13. The environment-friendly corpse treatment apparatus of claim 12, wherein a three-way valve is provided between the expansion member and the pair of evaporation coils so that the coolant transmitted from the expansion member flows in the evaporation coil to which the vapor is supplied.

14. The environment-friendly corpse treatment apparatus of claim 13, wherein a three-way valve is provided between the pair of evaporation coils and the compression member so that the coolant transmitted from the pair of evaporation coils to the compression member is alternately transmitted.

15. The environment-friendly corpse treatment apparatus of claim 8, wherein the dehumidification portion comprises a heat exchange member in which low temperature water flows.

16. The environment-friendly corpse treatment apparatus of claim 15, wherein there are provided a cooling pipe for supplying low temperature water so that the low temperature water flows in the heat exchange member, a retrieval pipe for retrieving high temperature water heated after being heat exchanged in the heat exchange member, and a cooling tower for cooling the high temperature water transmitted through the retrieval pipe and supplying the same to the cooling pipe.

17. The environment-friendly corpse treatment apparatus of claim 16, wherein the heat exchange member is provided along a circumference of the drying portion so that a temperature of an inner circumferential surface of the drying portion is lowered to a dew point of vapor generated in the drying portion.

18. The environment-friendly corpse treatment apparatus of claim 8, wherein the dehumidification portion is an electric precipitator for removing water molecules contained in the vapor generated in the drying portion using an electrostatic force.

19. The environment-friendly corpse treatment apparatus of claim 1, wherein the foreign matter separation portion comprises a brush member for separating the foreign matter by applying a physical force.

20. The environment-friendly corpse treatment apparatus of claim 19, wherein the brush member comprises one pair of roller type brushes having parallel rotational axes.

21. The environment-friendly corpse treatment apparatus of claim 1, wherein there are provided a container for storing the foreign matter-removed corpse, and a foreign matter container for allowing the separated foreign matter to be stacked therein.

22. The environment-friendly corpse treatment apparatus of claim 21, wherein the container comprises a compression member for compressing the corpse to reduce a volume of the foreign matter-removed corpse.
